# EUROPÄISCHE PATENTSCHRIFT

(11) **EP 0 989 313 B1**
(45) Veröffentlichungstag und Bekanntmachung des Hinweises auf die Patenterteilung: **17.12.2003**
(21) Anmeldenummer: 98118281.9
(22) Anmeldetag: 26.09.1998
(51) Int. Cl.: F16C 1/14

(54) **Montagesicherungsanordnung für ein auf einen Rastbolzen zu montierendes Ende eines Betätigungszuges**
Mounting protecting device for the terminal of a remote control mounted on a latching bolt
Dispositif de protection de montage pour l'extrémité d'une commande à distance montée sur un goujon de blocage

(43) Veröffentlichungstag der Anmeldung: 29.03.2000
(73) Patentinhaber: Ford Global Technologies, Inc., A subsidiary of Ford Motor Company, Dearborn, Michigan 48126 (US)
(72) Erfinder: Kampmann, Frank, 42489 Wuelfrath (DE)
(74) Vertreter: Drömer, Hans-Carsten, Dipl.-Ing.

(56) Entgegenhaltungen:
- EP-A- 0 183 341
- DE-A- 4 135 309
- DE-U- 1 970 274
- DE-U- 7 124 913
- US-A- 2 572 160

## Beschreibung

Die Erfindung bezieht sich auf eine Montagesicherungsanordnung für ein auf einen Rastbolzen zu montierendes Ende eines Betätigungszuges, wobei das Ende des Betätigungszuges mit einer Aufnahmeöffnung versehen ist, in der eine elastische Rasthülse eingerastet ist, in die der Rastbolzen eingeführt und verrastet wird.

Verbindungsanordnungen dieser Art sind im Kraftfahrzeug in vielfältigen Ausführungsformen bekannt und werden überall dort verwendet, wo z.B. Schaltgestängeverbindungen bestimmte Bewegungen übertragen müssen, jedoch gleichzeitig sichergestellt werden muß, daß an den Aggregaten auftretende Schwingungen nicht in unerwünschter Weise weitergeleitet werden.

Dementsprechend gibt es eine Reihe von Verbindungsanordnungen, bei denen ein Rastbolzen, bestehend aus einem zylindrischen Abschnitt, einem im Durchmesser verringerten Rastabschnitt und einen Rastkopfabschnitt in einer elastischen Rasthülse aufgenommen wird, die in einer Aufnahmeöffnung im Ende des Betätigungszuges durch äußere Halteflansche verrastet ist und die über eine innere ringförmige Rastschulter im Zusammenwirken mit dem im Durchmesser verringerten Rastabschnitt des Rastbolzens kommt, um diesen festzuhalten.

Sofern bei der Montage einer solchen Verbindungsanordnung die miteinander zu verbindenden Bauteile gut zugänglich sind, brauchen keine besonderen Vorkehrungen zur Montagesicherung bereitgestellt werden.

Muß diese Verbindungsanordnung jedoch ohne Sichtkontakt nur durch manuelle Handhabung montiert werden, so besteht die Gefahr, daß bei einem nicht vollsitändigen Einrasten der elastischen Rastschulter in den im Durchmesser verringerten Rastabschnitt am Rastbolzen es im Betrieb eines Kraftfahrzeuges zu einem unerwünschten und gefährlichen Lösen der Verbindung kommen kann.

Die Aufgabe der Erfindung ist es, eine Montagesicherungsanordnung für diesen Fall zu schaffen, die bei Verbindungsanordnungen, die unter schwierigen Verhältnissen montiert werden müssen, auf das Ende des Betätigungszuges aufgesetzt wird und die sicherstellt, daß bei einer nicht vollständigen Einrastung der Verbindungsanordnung dies unmittelbar erfaßt werden kann, da eine Umkehr der Montagebewegung auftritt.

Gemäß der Erfindung wird diese Aufgabe gelöst, indem an einem Ende eines Betätigungszuges im Bereich der Verbindungsanordnung eine Montagesicherungsanordnung der im Patentanspruch erläuterten Art aufgesetzt wird.

Dadurch, daß die Einsetzbewegung des Rastbolzens unter Überwindung eines entgegenwirkenden Federdruckes erfolgen muß, der so ausgelegt ist, daß er den nicht vollständig eingesetzten Rastbolzen wieder auswirft, kann der die Montage ausführende Fachmann unmittelbar einen Hinweis darauf bekommen, daß er den Rastbolzen erneut und mit größerem Nachdruck einsetzen muß.

Die Erfindung wird anhand eines in der Zeichnung gezeigten Ausführungsbeispieles näher erläutert. Es zeigt:

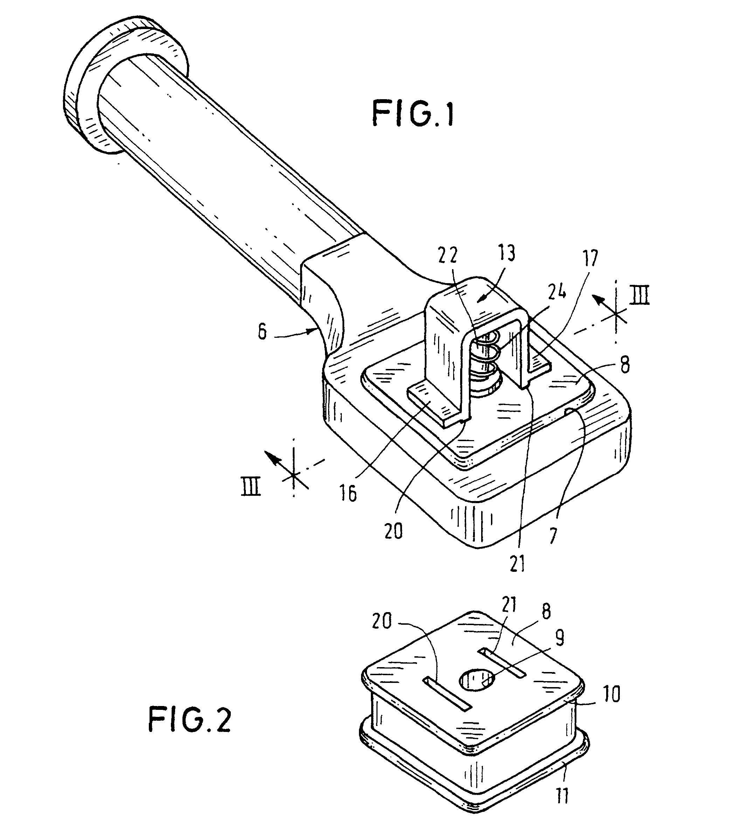

- Fig. 1: eine Schrägrißansicht einer Verbindungsanordnung mit aufgesetzter Montagesicherungsanordnung,
- Fig. 2: eine Ansicht der veränderten elastischen Rasthülse und
- Fig. 3: einen Schnitt entlang der Linie III-III in Fig. 1, aus der die Befestigung der Montagesicherungsanordnung in der elastischen Rasthülse ersichtlich ist.

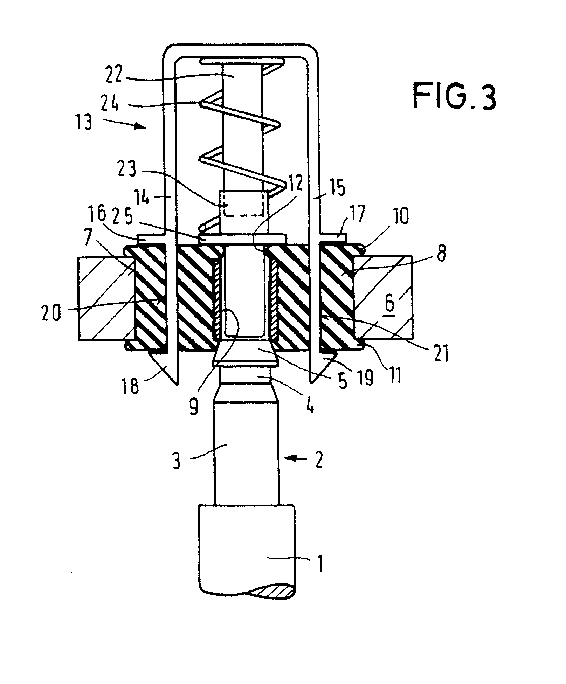

In Fig. 3 ist ein Betätigungselement 1, z.B. eines Wechselgetriebes (nicht gezeigt) mit einem Rastbolzen 2 verbunden, der im wesentlichen drei Abschnitte, einen zylindrischen Abschnitt 3, einen im Durchmesser verringerten Rastabschnitt 4 und einen sogenannten Rastkopf 5 aufweist. Ein Ende eines Betätigungszuges 6, der mit einem Betätigungsgestänge oder Seilzug (nicht gezeigt) verbunden ist, weist eine Aufnahmeöffnung 7 auf, in die eine elastische Rasthülse 8 aus gummielastischem Material mit einer Lagerhülse 9 aus einem härter elastischen Material, gehalten durch äußere Rastflansche 10 und 11, eingesetzt ist.

Die elastische Rasthülse 8 weist eine innere, ringförmige Rastschulter 12 auf, die vorgesehen ist, um den Rastbolzen 2 benachbart seinem Rastkopf 5 in dem im Durchmesser reduzierten Rastabschnitt 4 festzuhalten.

Gemäß der Erfindung wird nun im Bereich der Verbindungsanordnung eine Montagesicherungsanordnung aufgesetzt, die im wesentlichen aus einem U-förmigen Halteteil 13 besteht, dessen Schenkel 14 und 15 über Anlageflansche 16 und 17 und Rasthaken 18 und 19 in Schlitzen 20 und 21 in der elastischen Rasthülse 8 festgelegt werden.

An der Basis des U-förmigen Halteteiles 13 ist ein Bolzen 22 angeordnet, auf dem ein hülsenförmiger Kolben 23 gleitend aufgenommen wird und durch eine weiche Schraubenfeder 24 in eine Aufnahmebohrung für den Rastbolzen 2 hineingedrängt wird. Über einen Flansch 25 wird diese Ausfederungsbewegung begrenzt sobald der hülsenförmige Kolben 23 an der Außenfläche der elastischen Rasthülse 8 anliegt.

Um den Rastbolzen 2 in der elastischen Rasthülse 8 im Ende des Betätigungszuges 6 montieren zu können, muß über den Rastbolzen 2 ein Druck ausgeübt werden, der den Hülsenkolben 23 entgegen der Kraft seiner Feder 24 so weit zurückdrängt, bis der im Durchmesser verringerte Rastabschnitt 4 des Rastbolzens 2 die innere ringförmige Rastschulter 12 der elastischen Rasthülse 8 erreicht.

Die Kraft der leichten Schraubenfeder 24 ist hierbei so ausgelegt, daß bei einer erfolgreichen Verrastung der Rastschulter 12 mit dem Rastabschnitt 4 ein Auswerfen des Rastbolzens 2 nicht mehr erfolgt. Wird jedoch der Rastbolzen 2 ungenügend tief eingesetzt, so kommt es zu keiner Verrastung der Rastschulter 12 mit dem Rastabschnitt 4 und die Kraft der leichten Schraubenfeder 24 reicht aus, um den Rastbolzen 2 wieder auszuwerfen, wodurch der die Montage vornehmende Arbeiter auf die nicht geglückte Einrastung zweifelsfrei hingewiesen wird.

## Patentansprüche

1. Montagesicherungsanordnung für ein auf einen Rastbolzen (2) zu montierendes Ende eines Betätigungszuges in dem in einer Aufnahmeöffnung (7) eine elastische Rasthülse (8) über äußere Rastflansche (10 und 11) verrastet aufgenommen ist und eine Aufnahmehülse (9) für den Rastbolzen (2) aufweist, dessen Rastabschnitt (4) mit einer Rastschulter (12) der Rasthülse (8) verrastet ist,
**dadurch gekennzeichnet, daß**
- am Ende des Betätigungszuges (6) ein U-förmiges Halteteil (13) über seine Schenkel (14 und 15), Anlageflansche (16 und 17) und Rasthaken (18 und 19) am Ende des Betätigungszuges in Schlitzen (20 und 21) in der elastischen Rasthülse (8) festgelegt ist,
- an der Basis des Halteteiles (13) ein Bolzen (22) aufragt, auf dem ein hülsenförmiger Kolben (23) durch eine leichte Schraubenfeder (24) axial verlagerbar ist und über einen Anlageflansch (25) an den Rastflansch (10) der elastischen Rasthülse (8) angelegt wird, wobei sich der hülsenförmige Kolben (23) um ein wesentliches Maß in die Aufnahmehülse (9) für den Rastbolzen (2) erstreckt.

## Claims

1. Assembly assurance arrangement for one end of an actuating pull which is to be mounted on a latching pin (2) and in which an elastic latching sleeve (8) is held in a latched manner in a receiving opening (7) via outer latching flanges (10 and 11) and has a receiving sleeve (9) for the latching pin (2), the latching section (4) of which is latched to a latching shoulder (12) of the latching sleeve (8),
**characterized in that**
- at the end of the actuating pull (6) a U-shaped retaining part (13) is fixed via its limbs (14 and 15), bearing flanges (16 and 17) and latching hooks (18 and 19) at the end of the actuating pull in slots (20 and 21) in the elastic latching sleeve (8), and
- from the base of the retaining part (13) protrudes a pin (22) on which a sleeve-shaped piston (23) can be shifted axially by means of a light-duty helical spring (24) and is placed onto the latching flange (10) of the elastic latching sleeve (8) via a bearing flange (25), the sleeve-shaped piston (23) extending by a substantial extent into the receiving sleeve (9) for the latching pin (2).

## Revendications

1. Dispositif de protection de montage pour une extrémité d'une commande par câble à monter sur un goujon d'encliquetage (2), dans laquelle une douille d'encliquetage (8) élastique est reçue par encliquetage dans une ouverture de réception (7) par le biais de brides d'encliquetage extérieures (10 et 11) et présente une douille de réception (9) pour le goujon d'encliquetage (2), dont la portion d'encliquetage (4) est encliquetée avec un épaulement d'encliquetage (12) de la douille d'encliquetage (8),
**caractérisé en ce que**
- à l'extrémité de la commande par câble (6), une pièce de fixation (13) en forme de U est fixée par le biais de ses branches (14 et 15), de ses brides d'appui (16 et 17) et de crochets d'encliquetage (18 et 19) à l' extrémité de la commande par câble dans des fentes (20 et 21) dans la douille d'encliquetage (8) élastique,
- à la base de la partie de fixation (13) dépasse un goujon (22) sur lequel un piston en forme de douille (23) est déplaçable axialement par un ressort hélicoïdal léger (24) et est appliqué par le biais d'une bride d'appui (25) contre la bride d'encliquetage (10) de la douille d'encliquetage (8) élastique, le piston en forme de douille (23) s'étendant sur une mesure considérable dans la douille de réception (9) pour le goujon d'encliquetage (2).
